# EUROPÄISCHE PATENTSCHRIFT

(11) **EP 0 858 258 B1**
(45) Veröffentlichungstag und Bekanntmachung des Hinweises auf die Patenterteilung: **31.05.2000**
(21) Anmeldenummer: 96945700.1
(22) Anmeldetag: 30.10.1996
(51) Int. Cl.: A01C 7/00

(54) **DRILLMASCHINE MIT STELLVORRICHTUNG FÜR SÄSCHAR UND DRUCKROLLE**
SEED DRILL WITH DEVICE FOR ADJUSTING THE SEEDING COULTER AND THE PRESSING CYLINDER
MACHINE A SEMER EN LIGNE POURVUE D'UN DISPOSITIF DE REGLAGE DU COUTRE D'ENSEMENCEMENT ET DU ROULEAU DE PRESSION

(30) Priorität: 31.10.1995 DE 19540593; 28.10.1996 DE 19644751
(43) Veröffentlichungstag der Anmeldung: 19.08.1998
(73) Patentinhaber: Lemken GmbH & Co. KG, 46519 Alpen (DE)
(72) Erfinder: SIEBERS, Joseph, D-46509 Xanten (DE); MEURS, Wilhelm, D-46519 Alpen (DE); TERBOVEN, Johannes, D-46519 Alpen (DE)
(74) Vertreter: Schulte, Jörg, Dipl.-Ing.
(86) Internationale Anmeldenummer: DE9602063
(87) Internationale Veröffentlichungsnummer: WO9716060

(56) Entgegenhaltungen:
- DE-A- 2 728 006
- US-A- 4 311 104
- US-A- 4 696 349
- US-A- 5 398 771

## Beschreibung

Die Erfindung betrifft eine Drillmaschine mit mindestens einem Säschar, insbesondere einem Doppelscheibensäschar mit nachgeordneter Druckrolle, die als Einheit über ein Lenkergetriebe mit Lenker am Rahmen oder am Saatgutbehälter befestigt ist, wobei die Lenker in Fahrtrichtung konvergierend angeordnet sind (siehe DE-A-2 728 006).

Drillmaschinen sind Reihensämaschinen, die die Samen in Reihen aussäen. Das Saatgut wird über Dosier- und Fördereinrichtungen aus dem Saatgutbehälter dem Säschar vorzugsweise einem Doppelscheibensäschar zugeführt. Diese Säschare ziehen Furchen, in denen das Saatgut abgelegt wird. Über die nachlaufenden Druckrollen wird die Furche zugedrückt. Diese Druckrollen werden den Säscharen daher in der Regel nachgeschaltet. Für die exakte Tiefenführung der Säschare über die Rolle wird die Einheit aus Säschar und Druckrolle parallel verschwenkbar mit dem Rahmen bzw. dem Saatgutbehälter verbunden. Derartige Parallelsysteme haben den wesentlichen Nachteil, daß die Gewichtsbelastung auf das Säschar bzw. die Druckrolle und die Tiefeneinstellung nicht einfach veränderbar ist.

Der Erfindung liegt daher die Aufgabe zugrunde, eine Drillmaschine zu schaffen, bei der die Tiefeneinstellung und die Druckbelastung für die Einheit aus Säschar und Druckrolle einerseits einfach und andererseits, ohne die Anpaßbarkeit dieser Einheit an den Boden einzuschränken, verändert werden kann.

Die Aufgabe wird gemäß der Erfindung dadurch gelöst, daß die Lenker mit einem Zwischenrahmen verbunden sind, der über ein zusätzliches Lenkergetriebe am Rahmen oder am Saatgutbehälter oder an einem Vorlaufgerät angelenkt ist, wobei das zusätzliche Lenkergetriebe in unterschiedlichen Positionen einstellbar ausgebildet ist.

Die Druckbelastung und die Eindringtiefe der Säschare in den Boden können somit einfach über die Verstellung des zusätzlichen Lenkergetriebes eingestellt werden, wenn die Lenker dieses Lenkergetriebes als parallele Lenker ausgebildet sind. Über die Einstellung des Lenkergetriebes in unterschiedlichen Positionen ist es beispielsweise möglich, den Zwischenrahmen tiefer zu setzen, was zur Konsequenz hat, daß der Schnittpunkt der die Einheit aus Säschar und Druckrolle tragenden Lenker nach unten wandert. Dies erhöht die Druckbelastung auf die Säschar-/Druckrolleneinheit, wobei durch eine Kippbewegung der Säschar-/Druckrolleneinheit eine Vergrößerung der Saattiefe erreicht wird. Durch Höhersetzen des Zwischenrahmens wird umgekehrt eine Reduzierung der Saattiefe erreicht. Eine entsprechende Einstellung ist erreichbar, wenn das Lenkergetriebe am Rahmen, am Saatgutbehälter oder am Vorlaufgerät angelenkt ist. Dabei eignet sich vor allem eine Kreiselegge als Vorlaufgerät. Durch die konvergierende Anordnung der Lenker mit einem Schnittpunkt im Bereich der zuvor erwähnten, die Säschar-/Druckrolleneinheit tragenden Lenker, die ja ebenfalls konvergierend angeordnet sind, kann eine Veränderung der Druckbelastung erzielt werden, ohne die Sätiefe selbst im geringsten zu verändern. Denkbar ist es auch, daß die Lenker des zusätzlichen Lenkergetriebes parallel zueinander angeordnet sind.

Nach einer zweckmäßigen Ausbildung der Erfindung ist vorgesehen, daß das zusätzliche Lenkergetriebe über eine die Lage der Lenker ändernde Stelleinrichtung verfügt. Durch eine Veränderung der Lage der Lenker, d. h. durch Einstellung einer Konvergenz kann damit gezielt die Druckbelastung angepaßt bzw. verändert werden. Vorteilhafterweise ist es möglich, die Druckbelastung oder die Sätiefe vom Schleppersitz aus einzustellen, und zwar dadurch daß die Stelleinrichtung fernbedienbar ausgebildet ist. Dabei ist es denkbar, daß als Stelleinrichtung ein Stellmotor dient, der ein Verschieben des Drehpunktes im Abstand der Länge des Lenkers um den Drehpunkt bewirkend ausgebildet ist. Mit dem zweiten Drehpunkt ist der nicht zu verändernde Drehpunkt des jeweiligen Lenkers gemeint. Dabei ist ein Verschieben des Drehpunktes des einen Lenkers zweckmäßig dadurch zu bewirken, daß der Drehpunkt in einer Schlitzführung verschiebbar ausgebildet ist, so daß die Länge des Lenkers beibehalten wird. Wie schon erwähnt, kann so eine genaue Sätiefe eingehalten bzw. auch jeweils eingestellt werden.

Eine Abstimmung der beiden Lenkergetriebe ist insbesondere gewährleistet, wenn die Lenker des zusätzlichen Lenkergetriebes in konvergierender Stellung so angeordnet sind, daß ihr Schnittpunkt im Bereich des Schnittpunktes des Lenkergetriebes mit den Lenkern liegt.

Durch das Vorsehen eines per Spindel längenveränderlichen Lenkers des zusätzlichen Lenkergetriebes, vorzugsweise des oberen Lenkers, wird eine zentrale unabhängige Sätiefeneinstellung vorgegeben, mit der auch der Sätiefenbereich voreingestellt werden kann. Hiermit kann die Sätiefe ohne Veränderung der Druckbelastung auf Säschar und Druckrolle eingestellt werden.

Eine besonders vorteilhafte Ausführung ist die, bei der die zusätzlichen Lenker in ihrer Lage zueinander derart verändert bzw. umgeschaltet werden, daß sie einerseits parallel zueinander stehen oder andererseits so konvergierend angeordnet sind, daß sich ihr Schnittpunkt im Bereich der Lenker der Einheit aus Säschar und Druckrolle schneidet. Dadurch wird die Sätiefe einfach eingestellt mit parallel zueinander stehenden Lenkern. Nach dieser Einstellung wird das Lenkergetriebe einfach auf "Konvergenz" umgeschaltet. Nun kann bei Bedarf der Schar bzw. Druckrollendruck verändert werden, ohne die Sätiefe zu beinflussen. Somit ist eine einfache und schnelle Schar- und Rollendruck- und Sätiefeneinstellung gegeben. Die Umschaltung und auch die Tiefeneinstellung erfolgt vorzugsweise über Stellmotoren oder Hydraulikzylinder, wobei es auch denkbar ist, daß eine Stelleinrichtung in Form einer Spindel oder eines Spindelmotors oder eines Hydraulikzylinders oder einer Stiftverstellung vorgesehen ist, die auf den unteren Lenker des Lenkergetriebes einwirkt.

Aufgrund der erfindungsgemäßen Ausbildung ist es möglich, die Breite der gesamten Drillmaschine den jeweiligen Einsatzbedingungen entsprechend zu verändern, indem dem Zwischenrahmen mehrere Einheiten mit Säschar und Druckrolle zugeordnet sind.

Weiter kann vorteilhaft auch das gesamte zusätzliche Lenkergetriebe verstellt bzw. anders eingestellt werden, indem einer der Lenker des zusätzlichen Lenkergetriebes und damit das zusätzliche Lenkergetriebe selbst über eine Stiftverstellung in wählbaren Positionen sperrbar ausgebildet ist. Dabei ist die Stiftverstellung zweckmäßigerweise von einer Lochleiste und in deren Bohrungen festlegbaren Bolzen gebildet. Da entsprechende Verstellungen relativ selten erforderlich sind, reicht eine derartige Vonhandeinstellung, um auf diese Art und Weise, das zusätzliche Lenkergetriebe selbst entsprechend in eine andere Position zu bringen.

In weiterer Optimierung des Erfindungsgegenstandes ist vorgesehen, daß das das Säscher tragende (?) Lenkergetriebe mit Energiespeichern z. B. Federn versehen sind, die eine nach unten gerichtete Kraft auf das Säschar und die Druckrolle ausübend angeordnet sind und daß das Lenkergetriebe über Anschläge in seiner Schwenkbarkeit nach unten begrenzbar ausgebildet ist. Damit kann auf einfache Art und Weise insbesondere das zusätzliche Lenkergetriebe selbst in eine Ausgangslage gebracht werden, aus der es dann gegen die Kraft des Energiespeichers zu bringen ist, wobei die "Ausgangslage" die jeweils untere ist. Dabei ist diese untere Ausgangsstellung dadurch vorgegeben, daß entsprechende Anschläge vorgesehen sind. Vorteilhaft ist es dabei, wenn der Energiespeicher bzw. die Feder einstellbar ausgebildet und angeordnet ist, um so wiederum unterschiedlichen Gegebenheiten arbeiten zu können.

Die Erfindung zeichnet sich insbesondere dadurch aus, daß eine Drillmaschine geschaffen ist, bei der eine Veränderung der Druckbelastung möglich ist, ohne die Sätiefe selbst zu verändern. Andererseits kann aber auch der Sätiefenbereich durch eine Spindel o. ä. verändert werden, indem nämlich der Lenker des zuzätzlichen Lenkergetriebes längenveränderlich ausgebildet ist. Insgesamt gesehen ist damit eine Drillmaschine geschaffen, die sehr vielseitig einsetzbar ist und die in ihrer Wirkungsweise zweckmäßig vom Fahrersitz aus eingestellt werden kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Drillmaschine mit zwei Lenkergetrieben in Seitenansicht,
- Fig. 2: eine Teilansicht der Drillmaschine mit den als Parallellenker ausgebildeten zusätzlichen Lenkern,
- Fig. 3: die Drillmaschine im Ausschnitt mit als konvergierende Lenker ausgebildeten zusätzlichen Lenkern,
- Fig. 4: die Drillmaschine im Ausschnitt mit in der Konvergenz verstellbaren zusätzlichen Lenkern und
- Fig. 5: die Drillmaschine im Ausschnitt mit zusätzlicher Verstellspindel.

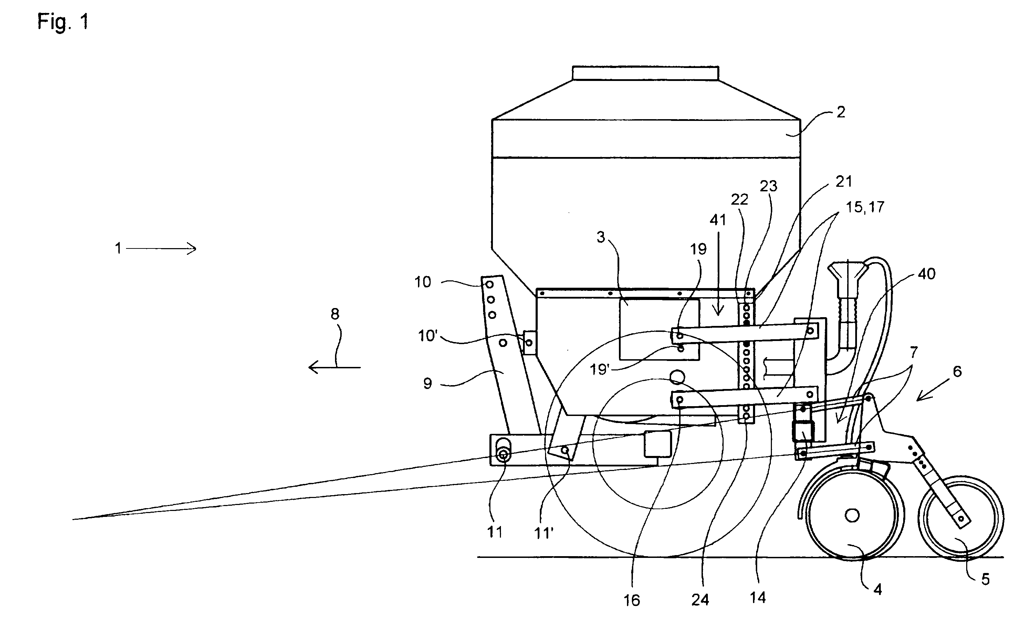

Die in Fig. 1 wiedergegebene Drillmaschine 1 besteht aus einem das Saatgut aufnehmenden Saatgutbehälter 2 und den ihn tragenden Rahmen 3. An diesem Rahmen 3 ist eine Einheit 6 indirekt angelenkt, die aus dem Säschar 4 und der Druckrolle 5 besteht.

Die aus Säschar 4 und Druckrolle 5 bestehende Einheit 6 ist über ein Lenkergetriebe 40 mit Lenkern 7, die in Fahrtrichtung 8 konvergierend angeordnet sind, mit einem Zwischenrahmen 14 verbunden. Der Zwischenrahmen 14 ist wiederum über ein zusätzliches Lenkergetriebe 41 mit Lenkern 15 mit dem Rahmen 3 der Drillmaschine 1 verbunden. Die Lenker 15 befinden sich in Fig. 1 in der Parallelstellung 17.

Auf der der Einheit 6 gegenüberliegenden Seite des Saatgutbehälters 2 bzw. des Rahmens 3 ist eine Koppeleinheit 9 vorgesehen, die mit mehreren Anschlagpunkten 10, 11 augerüstet ist. Durch diese Koppeleinheit 9 wird die gesamte Baueinheit entweder an das Dreipunktgestänge eines Traktors oder direkt an ein hier nicht dargestelltes Vorlaufgerät, z. B. eine Kreiselegge angebaut. Ohne diese Koppeleinheit 9 kann die Drillmaschine auch direkt, z. B. auf eine Kreiselegge oder einen Zinkenrotor aufgebaut werden. Dazu dienen die Anbaupunkte 10', 11'.

Eine Besonderheit ist es, daß bei der Drillmaschine 1 bzw. der Säschiene 45, daß die Einheit 6 bestehend aus Säschar 4 und Druckrolle 5 nicht direkt mit dem Saatgutbehälter 2, dem Rahmen 3 oder einem Vorlaufgerät verbunden ist, sondern vielmehr indirekt über einen Zwischenrahmen 14, der wie bereits weiter vorne erwähnt seinerseits wieder über ein zusätzliches Lenkergetriebe 41 mit Lenkern 15 mit dem Rahmen 3, dem Saatgutbehälter oder mit einem Vorlaufgerät oder Trägergerät verbunden ist und zwar entsprechend gelenkig.

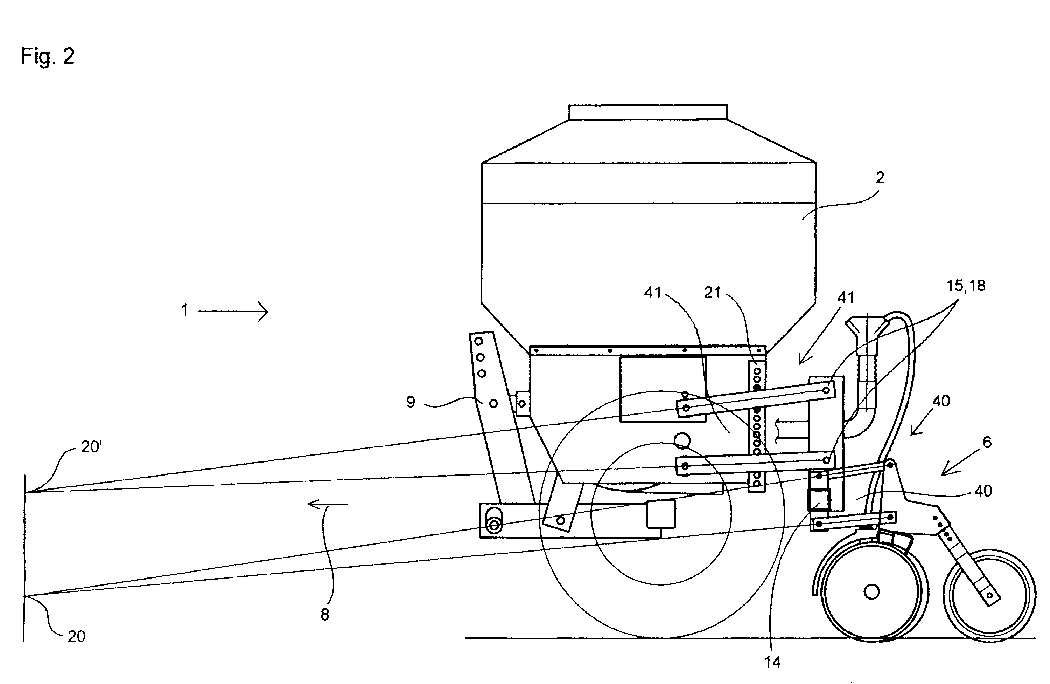

Nach Fig. 1 sind die Lenker 15 des zusätzlichen Lenkergetriebes 41 als parallele Lenker in Parallelstellung 17 und nach Fig. 2, Fig. 3 und Fig. 4 als konvergierende Lenker 15 in Konvergenzstellung 18 ausgebildet. Über die Anlenkbohrung 19 und eine zusätzliche Anlenkbohrung 19' ist dabei die Möglichkeit gegeben, dem zusätzlichen Lenkergetriebe 41 entweder die konvergierende oder eine parallele Anordnung vorzugeben.

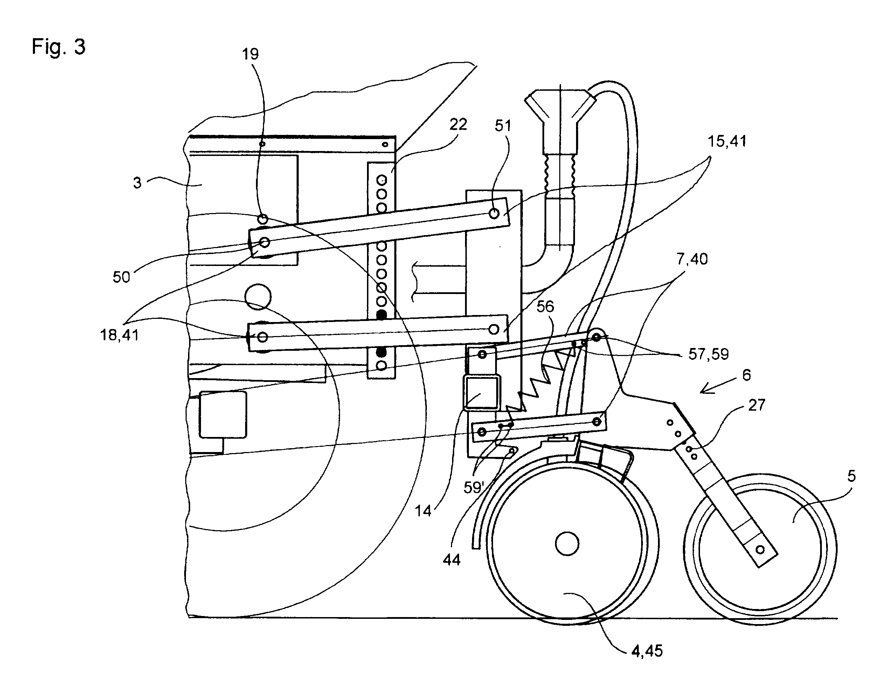

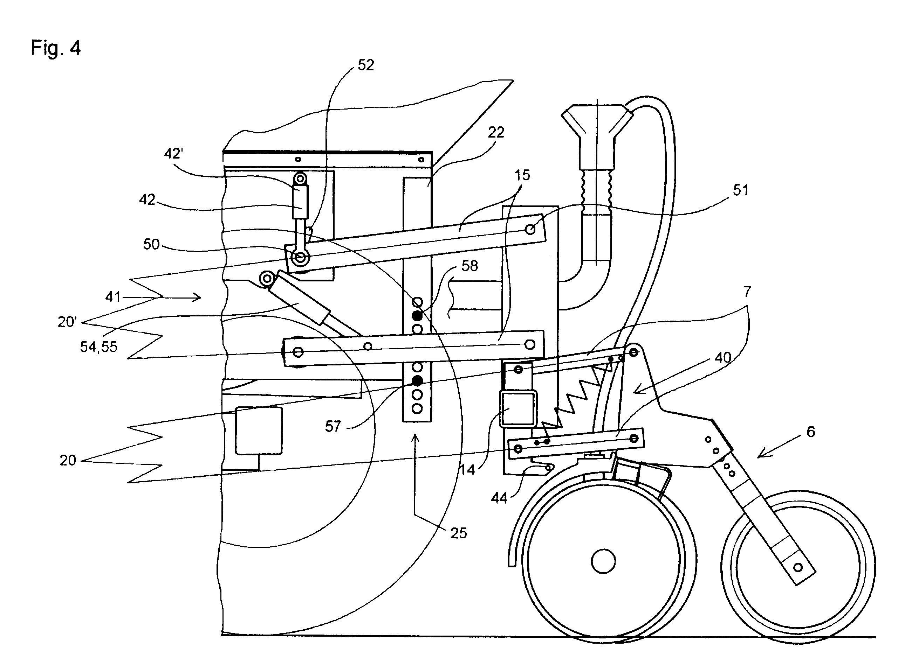

Gemäß Fig. 1, wo die parallele Lage der Lenker 15 des zusätzlichen Lenkergetriebes 41 dargestellt ist, wird beim Verstellen dieses Lenkergetriebes 41 mit Hilfe der Stellvorrichtung 21, 22, 25 eine Sätiefeneinstellung der Säschare 4 die Nickbewegung der Einheit 6 bewirkt. Diese Verstellung hat auch eine Druckbelastungsänderung auf die Einheit 6 mit Säschar 4 und Druckrolle 5 zur Folge, insbesondere dann wenn zusätzlich über die Zugpunktlage auch die in Fig. 3 und Fig. 4 gezeigte Feder 56 mehr oder weniger vorgespannt wird. Die Höhe des Schnittpunktes 20 beeinflußt auch unabhängig von einer Feder die Druckbelastung auf das Säschar 4 und die Druckrolle 5. Je niedriger der Schnittpunkt bzw. der Zugpunkt 20 ist, um so höher ist die Druckbelastung. Je höher der Zugpunkt 20 ist, um so geringer ist die Druckbelastung auf das Säschar 4 und die Druckrolle 5.

In schwereren Bodenverhältnissen aber auch bei der Mulch- oder Direktsaat ist die Unterstützung der zugpunkt- und gewichtabhängigen Säschar- und Druckrollenbelastung durch die Federkraft einer Feder 56 oder anderer Energiespeicher von Vorteil. Ein Beispiel zeigen die Figuren 3 und 4, wo ein Lenkergetriebe 40 mit Feder 56 vorgesehen ist. Die Federkraft bzw. die Federvorspannung läßt sich einfach durch Verändern der Federlänge umstellen oder aber durch ein einfaches Umhängen der Feder. Dazu dienen die Bohrungen 59.

Fig. 2 verdeutlicht, daß der Schnittpunkt 20' der konvergierenden Lenker 15 des zusätzlichen Lenkergetriebes 41 im Bereich des Schnittpunktes 20 der konvergierend angeordneten Lenker 7 des Lenkergetriebes 40 liegt. Diese Lenker 7 tragen die Einheit aus Säschar 4 und Druckrolle 5. Aufgrund dieser Abstandsdeckungsgleichheit der Schnittpunkte wird bewirkt, daß die Verstellung des zusätzlichen Lenkergetriebes 41 keine Sätiefenänderung, sondern nur eine Druckbelastungsänderung eintritt.

Eine Stellvorrichtung ist mit 21 bezeichnet. Über diese Stellvorrichtung 21 wird die Druckbelastung auf die Einheit 6 aus Säschar 4 und Druckrolle 5 entsprechend verändert. Diese Stellvorrichtung 21 besteht hier aus einer Lochleiste 22 mit einer Vielzahl von Bohrungen 23, 24, so daß mit Hilfe eines hier nur angedeuteten Bolzens 25 die Einstellung bzw. die Druckbelastung auf die Einheit 6 entsprechend verändert werden kann. Wird beispielsweise über die Stellvorrichtung 21 der Zwischenrahmen 14 tiefer gesetzt, führt dies dazu, daß der Schnittpunkt 20 der in Fahrtrichtung 8 konvergierenden Lenker nach unten wandert. Dies erhöht die Druckbelastung auf die Einheit 6 aus Säschar 4 und Druckrolle 5, was aber keinen effektiven Einfluß auf die Sätiefe hat.

Die Fig. 3 zeigt einen vergrößerten Ausschnitt aus Fig. 2. Beim Ausheben der Drillmaschine 1 mit Einheit 6 aus Säschar 4 und Druckrolle 5 wird durch den Anschlag 44 sichergestellt, daß die Einheit 6 mitausgehoben wird.

In Fig. 4 ist die Einheit 6 und die Lenkergetriebe 40, 41 dargestellt, wobei das zusätzliche Lenkergetriebe 41 in die konvergierende Stellung geschaltet ist. Über eine Stelleinrichtung 42, z. B. einen Stellmotor 42' kann der Lenker 15' um den Drehpunkt 51 im Schlitzloch 52 entweder in die parallele Lage zum Lenker 15" oder aber in eine konvergierende Lage zum Lenker 15" verschwenkt werden. Vorteilhaft sorgen die Schlitzenden der Anschläge für die Endstellung der richtigen parallelen oder konvergierenden Stellung der Lenker 15. Durch das Vorsehen von entsprechend verstellbaren Anschlägen ist auch eine Konvergenz mit hinten liegendem Schnittpunkt der Lenker 15 denkbar.

Mit dem in der oberen, parallelen Stellung befindlichen Lenker 15' wird über die Stelleinrichtung 54 z. B. ein Hydraulikzylinder 55, das zusätzliche Lenkergetriebe 41 verschwenkt, was über das konvergierende Lenkergetriebe 40 eine Sätiefenveränderung des Säschares 4 bewirkt. Ist die Sätiefe eingestellt, so wird mittels Stellmotor 42' der obere Lenker 15' in die untere also in die konvergierende Stellung verschoben. Die Schnittpunkte 20 und 20' befinden sich dann im gleichen Abstand zur Einheit 6. Nun kann bei Betätigung des gleichen Hydraulikzylinders 55 der Druck auf das Säschar und die Druckrolle 5 verändert werden, ohne daß sich dadurch die Sätiefe ändert. Falls der Einstellbereich für die Sätiefe nicht ausreicht, so kann über die Steckvorrichtung 27 ein anderer Einstellbereich vorgewählt werden.

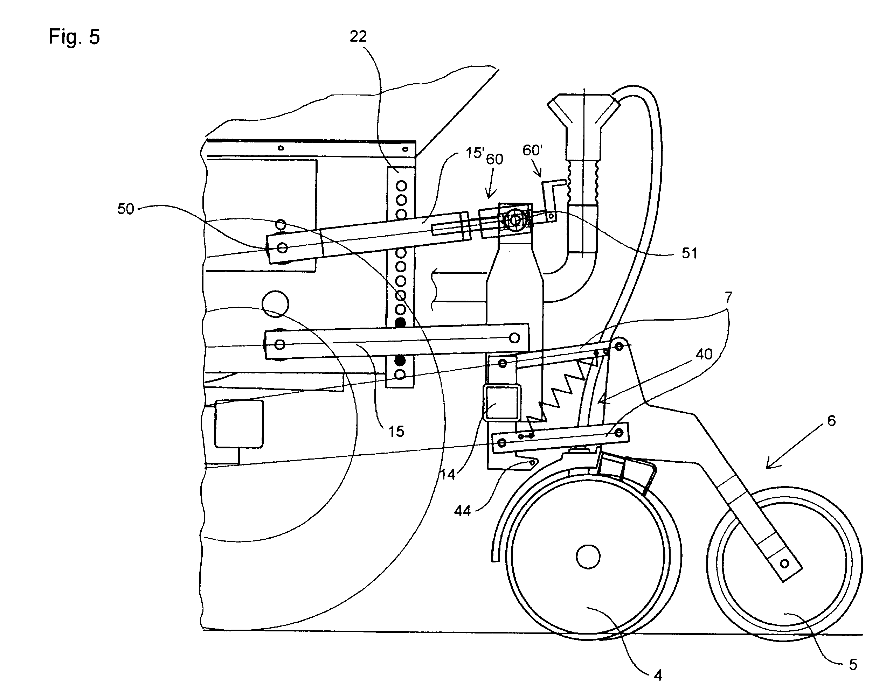

Fig. 5 zeigt eine Drillmaschine mit längenveränderbarem Lenker 15', der über eine Stellvorrichtung 60 z. B. eine Spindel 60' in seiner Lage veränderbar ist. Damit kann die Einstellvorrichtung insgesamt an der Druckrolle mit Stiftverstellung vollständig entfallen, da die Sätiefeneinstellung bzw. die Einstellung des Tiefenbereiches damit zentral und nicht über jede Einheit 6 einzeln verstellt zu werden braucht. Mit der Längeneinstellung kann auch die Konvergenz des zusätzlichen Lenkergetriebes 41 positiv beeinflußt werden.

Alle genannten Merkmale, auch die den Zeichnungen allein zu entnehmenden, werden allein und in Kombination als erfindungswesentlich angesehen.

## Patentansprüche

1. Drillmaschine (1) mit mindestens einem Säschar (4), insbesondere einem Doppelscheibensäschar mit nachgeordneter Druckrolle (5), die als Einheit (6) über ein Lenkergetriebe (40) mit Lenker (7) am Rahmen (3) oder am Saatgutbehälter (2) befestigt, wobei die Lenker (7) in Fahrtrichtung konvergierend angeordnet sind,
**dadurch gekennzeichnet,**
dass die Lenker (7) mit einem Zwischenrahmen (14) verbunden sind, der über ein zusätzliches Lenkergetriebe (41) am Rahmen (3) oder am Saatgutbehälter (2) oder an einem Vorlaufgerät angelenkt ist, wobei das zusätzliche Lenkergetriebe (41) in unterschiedlichen Positionen einstellbar ausgebildet ist.

2. Drillmaschine nach Anspruch 1,
**dadurch gekennzeichnet,**
daß das Vorlaufgerät, an dem das zusätzliche Lenkergetriebe (41) angelenkt ist, als Kreiselegge ausgebildet ist.

3. Drillmaschine nach einem der vorhergehenden Ansprüche,
**dadurch gekennzeichnet,**
daß die Lenker (15) des zusätzlichen Lenkergetriebes (41) parallel zueinander angeordnet sind.

4. Drillmaschine nach einem der vorhergehenden Ansprüche,
**dadurch gekennzeichnet,**
daß das zusätzliche Lenkergetriebe (41) über eine die Lage der Lenker (15) ändernde Stelleinrichtung (42) verfügt.

5. Drillmaschine nach Anspruch 4,
**dadurch gekennzeichnet,**
daß die Stelleinrichtung (42) fernbedienbar ausgebildet ist.

6. Drillmaschine nach Anspruch 4 und Anspruch 5,
**dadurch gekennzeichnet,**
daß als Stelleinrichtung (42) ein Stellmotor (42') dient, der ein Verschieben des Drehpunktes (50) im Abstand der Länge des Lenkers (15') um den Drehpunkt (51) bewirkend ausgebildet ist.

7. Drillmaschine nach Anspruch 6,
**dadurch gekennzeichnet,**
daß der Drehpunkt (50) in einer Schlitzführung (52) verschiebbar ausgebildet ist.

8. Drillmaschine nach einem der vorhergehenden Ansprüche,
**dadurch gekennzeichnet,**
daß die Lenker (15) des zusätzlichen Lenkergetriebes (41) in konvergierender Stellung so angeordnet sind, daß ihr Schnittpunkt (20') im Bereich des Schnittpunktes (20) des Lenkergetriebes (40) mit den Lenkern (7) liegt.

9. Drillmaschine nach einem der vorhergehenden Ansprüche,
**dadurch gekennzeichnet,**
daß der obere Lenker (15') des zusätzlichen Lenkergetriebes (41) als längenveränderlicher Lenker, vorzugsweise als per Spindel (60') verstellbarer Lenker ausgebildet ist.

10. Drillmaschine nach einem der vorhergehenden Ansprüche,
**dadurch gekennzeichnet,**
daß eine Stelleinrichtung (54) in Form einer Spindel oder eines Spindelmotors oder eines Hydraulikzylinders (55) oder einer Stiftverstellung vorgesehen ist, die auf den unteren Lenker (15") des Lenkergetriebes (41) einwirkt.

11. Drillmaschine nach einem der vorhergehenden Ansprüche,
**dadurch gekennzeichnet,**
daß dem Zwischenrahmen (14) mehrere Einheiten (6) mit Säschar (4) und Druckrolle (5) zugeordnet sind.

12. Drillmaschine nach einem der vorhergehenden Ansprüche,
**dadurch gekennzeichnet,**
daß einer der Lenker (15) des zusätzlichen Lenkergetriebes (41) und damit das zusätzliche Lenkergetriebe (41) selbst über eine Stiftverstellung (21) in wählbaren Positionen sperrbar ausgebildet ist.

13. Drillmaschine nach Anspruch 12,
**dadurch gekennzeichnet,**
daß die Stiftverstellung (21) von einer Lochleiste (22) und in deren Bohrungen (23, 24) festlegbaren Bolzen (25) gebildet ist.

14. Drillmaschine nach einem der vorhergehenden Ansprüche,
**dadurch gekennzeichnet,**
daß das Lenkergetriebe (40) mit Energiespeichern z. B. Federn (56) versehen sind, die eine nach unten gerichtete Kraft auf das Säschar (4) und die Druckrolle (5) ausübend angeordnet sind und daß das Lenkergetriebe (40) über Anschläge (44) in seiner Schwenkbarkeit nach unten begrenzbar ausgebildet ist.

15. Drillmaschine nach Anspruch 14,
**dadurch gekennzeichnet,**
daß der Energiespeicher bzw. die Feder (56) einstellbar ausgebildet und angeordnet ist.

## Claims

1. Seed drill (1) with at least one seeding coulter (4), in particular a double disc seeding coulter with subsequent pressing cylinder (5), which is fastened as a unit (6) by way of steering gear (40) with steering levers (7) to the frame (3) or to the seed container (2), in which case the steering levers (7) are arranged to converge in the direction of travel, characterised in that the steering levers (7) are connected to an intermediate frame (14), which is pivoted by way of additional steering gear (41) on the frame (3) or seed container (2) or on a preceding device, the additional steering gear (41) being constructed to be adjustable in different positions.

2. Seed drill according to Claim 1, characterised in that the preceding device, on which the steering gear (41) is pivoted, is constructed as a rotary harrow.

3. Seed drill according to one of the preceding Claims, characterised in that the steering levers (15) of the additional steering gear (41) are arranged parallel to each other.

4. Seed drill according to one of the preceding Claims, characterised in that the additional steering gear (41) has an adjusting device (42) changing the position of the steering levers (15).

5. Seed drill according to Claim 4, characterised in that the adjusting device (42) is constructed so that it is suitable for remote control.

6. Seed drill according to Claim 4 and Claim 5, characterised in that serving as the adjusting device (42) is a servo motor (42'), which is constructed to bring about a displacement of the point of rotation (50) by the distance of the length of the steering lever (15') about the point of rotation (51).

7. Seed drill according to Claim 6, characterised in that the point of rotation (50) is constructed to slide in a slot guide (52).

8. Seed drill according to one of the preceding Claims, characterised in that the steering levers (15) of the additional steering gear (41) are arranged in a convergent position so that their point of intersection (20') lies in the region of the point of intersection (20) of the steering gear (40) with the steering levers (7).

9. Seed drill according to one of the preceding Claims, characterised in that the upper steering lever (15') of the additional steering gear (41) is constructed as a steering lever of variable length, preferably as a steering lever adjustable by way of a spindle (60').

10. Seed drill according to one of the preceding Claims, characterised in that an adjusting device (54) is provided in the form of a spindle or of a spindle motor or of a hydraulic cylinder (55) or of a pin adjustment, which acts on the lower steering levers (15'') of the steering gear (41).

11. Seed drill according to one of the preceding Claims, characterised in that associated with the intermediate frame (14) are several units (6) with a seeding coulter (4) and pressing cylinder (5).

12. Seed drill according to one of the preceding Claims, characterised in that one of the steering levers (15) of the additional steering gear (41) and thus the additional steering gear (41) itself is constructed to be locked in selectable positions by way of a pin adjustment (21).

13. Seed drill according to Claim 12, characterised in that the pin adjustment (21) is formed by a perforated bar (22) and bolts (25) which can be fixed in its bores (23, 24).

14. Seed drill according to one of the preceding Claims, characterised in that the additional steering gear (41) is provided with energy stores, for example springs (56), which are arranged to exert a downwardly directed force on the seeding coulter (4) and the pressing cylinder (5) and that the steering gear (40) is constructed to be restricted by way of abutments (44) as regards its ability to swivel in a downwards direction.

15. Seed drill according to Claim 14, characterised in that the energy store or the spring (56) is constructed and arranged to be adjustable.

## Revendications

1. Machine à semer en ligne comprenant au moins un soc à semer (4), notamment un soc à semer à double disque avec un rouleau presseur (5) monté derrière, qui est fixé en tant qu'unité (6) sur le châssis (3) ou sur le récipient de semences (2) par l'intermédiaire d'une tringlerie comprenant des bielles (7), les bielles (7) étant disposées de façon convergente dans le sens de déplacement,
caractérisée en ce que
les bielles (7) sont reliées à un châssis intermédiaire (14) qui est articulé sur le châssis (3) ou sur le récipient de semences (2) ou sur un dispositif situé en avant par l'intermédiaire d'une tringlerie supplémentaire (41), la tringlerie supplémentaire (41) étant réglable dans des positions différentes.

2. Machine à semer en ligne selon la revendication 1,
caractérisée en ce que
le dispositif situé en avant, sur lequel est articulé la tringlerie supplémentaire (41), est une herse rotative.

3. Machine à semer en ligne selon l'une des revendications précédentes,
caractérisée en ce que
les bielles (15) de la tringlerie supplémentaire (41) sont disposées parallèlement l'une à l'autre.

4. Machine à semer en ligne selon l'une des revendications précédentes,
caractérisée en ce que
la tringlerie supplémentaire (41) dispose d'un dispositif de réglage (42) modifiant la position des bielles (15).

5. Machine à semer en ligne selon la revendication 4,
caractérisée en ce que
le dispositif de réglage (42) est télécommandé.

6. Machine à semer en ligne selon la revendication 4 et la revendication 5,
caractérisée en ce qu'
un moteur de réglage (42') sert en tant que dispositif de réglage (42), le moteur étant formé de façon à effectuer un déplacement autour du point de rotation (51) du point de rotation (50) situé à la distance de celui-ci égale à la longueur de la bielle (15').

7. Machine à semer en ligne selon la revendication 6,
caractérisée en ce que
le point de rotation (50) est déplaçable dans un guidage à fente (52).

8. Machine à semer en ligne selon l'une des revendications précédentes,
caractérisée en ce que
les bielles (15) de la tringlerie supplémentaire (41) sont disposées dans une position convergente de façon telle que leur point d'intersection (20') se trouve dans la zone du point d'intersection (20) des bielles (7) de la tringlerie (40) .

9. Machine à semer en ligne selon l'une des revendications précédentes,
caractérisée en ce que
la bielle supérieure (15') de la tringlerie supplémentaire (41) est formée en tant que bielle de longueur réglable, de préférence en tant que bielle pouvant être réglée par une broche (60).

10. Machine à semer en ligne selon l'une des revendications précédentes,
caractérisée en ce qu'
il est prévu un dispositif de réglage (54) sous la forme d'une broche ou d'un moteur de broche ou d'un vérin hydraulique (55) ou d'un réglage à chevilles, ce dispositif de réglage agissant sur la bielle inférieure (15'') de la tringlerie (41).

11. Machine à semer en ligne selon l'une des revendications précédentes,
caractérisée en ce que
plusieurs unités (6) comprenant un soc à semer et un rouleau presseur (5) sont associées au châssis intermédiaire (14).

12. Machine à semer en ligne selon l'une des revendications précédentes,
caractérisée en ce que
une des bielles (15) de la tringlerie supplémentaire (41), et en conséquence la tringlerie supplémentaire (41) même, est verrouillable dans des positions pouvant être choisies par un réglage à chevilles (21).

13. Machine à semer en ligne selon la revendication 12,
caractérisée en ce que
le réglage à chevilles (21) est formé par une barrette à trous (22) et des boulons (25) pouvant être fixés dans les alésages (23, 24) de cette barrette.

14. Machine à semer en ligne selon l'une des revendications précédentes,
caractérisée en ce que
la tringlerie (40) est pourvue d'accumulateurs d'énergie, par exemple de ressorts (56), qui sont disposés de façon à exercer une force dirigée vers le bas sur le soc à semer (4) et sur le rouleau presseur (5), et en ce que la tringlerie (40) est réalisée de façon à pouvoir être limitée par des butées (44) dans son basculement vers le bas.

15. Machine à semer en ligne selon la revendication 14,
caractérisée en ce que
l'accumulateur d'énergie ou le ressort (56) est réalisé et disposé de façon à pouvoir être réglé.
